(19) **Europäisches Patentamt**

**European Patent Office**

**Office européen des brevets**

(11) **EP 1 279 437 B1**

(12) **EUROPÄISCHE PATENTSCHRIFT**

(45) Veröffentlichungstag und Bekanntmachung des Hinweises auf die Patenterteilung:
**02.11.2005 Patentblatt 2005/44**

(51) Int Cl.7: **B01L 3/02**, G01F 11/02, B01L 11/00

(21) Anmeldenummer: **02015813.5**

(22) Anmeldetag: **16.07.2002**

(54) **Verfahren zum Dosieren von Flüssigkeiten und Vorrichtung zur Durchführung des Verfahrens**

Method and Device for dosing of liquids

Dispositif et procédé du dosage de liquides

(84) Benannte Vertragsstaaten:
**AT BE BG CH CY CZ DE DK EE ES FI FR GB GR IE IT LI LU MC NL PT SE SK TR**

(30) Priorität: **27.07.2001 DE 10136790**

(43) Veröffentlichungstag der Anmeldung:
**29.01.2003 Patentblatt 2003/05**

(73) Patentinhaber: **EPPENDORF AG**
**22339 Hamburg (DE)**

(72) Erfinder:
• **Richter, Jörg**
**19230 Belsch (DE)**
• **von Beichmann, Boris**
**22391 Hamburg (DE)**
• **Salje, Gerhard, Dr.**
**22393 Hamburg (DE)**

(74) Vertreter:
**Hauck, Graalfs, Wehnert, Döring, Siemons**
**Neuer Wall 41**
**20354 Hamburg (DE)**

(56) Entgegenhaltungen:
**EP-A- 0 904 840      EP-B- 0 257 353**
**DE-A- 19 612 797     US-A- 6 158 269**

EP 1 279 437 B1

**Beschreibung**

Die Erfindung bezieht sich auf ein Verfahren zum Dosieren von Flüssigkeiten und auf eine Vorrichtung zur Durchführung des Verfahrens.

Es sind bereits Pipetten und andere Dosiersysteme bekannt, die nach dem Luftpolsterprinzip arbeiten. Dabei wird eine Luftsäule verschoben, um die zu dosierende Flüssigkeit in eine Pipettenspitze einzusaugen bzw. daraus auszutreiben. Die Verschiebung der Luftsäule wird von einem Kolben in einem Zylinder bewirkt. Bei Handpipetten wird der Kolben mittels eines Betätigungsknopfes gegen die Wirkung einer Rückstellfeder verschoben. Bei Pipetten mit einstellbarem Dosiervolumen ist ein verstellbarer Anschlag zur Begrenzung des Kolbenhubes vorhanden. Die Verstellung erfolgt mittels eines Drehrädchens, das über ein Getriebe auf den Anschlag wirkt, wobei das eingestellte Dosiervolumen mittels eines Zählwerks abgelesen werden kann.

Bei den bekannten Handpipetten ist die Einstellung des Dosiervolumens zeitaufwendig und mühselig. Das Getriebe zum Verstellen des Anschlages ist im Hinblick auf die gewünschte Feinheit der Einstellung ausgelegt. Im ungünstigsten Fall muß mittels dieses Getriebes der Anschlag über den gesamten Einstellbereich verschoben werden. Außerdem ist ergonomisch ungünstig, daß durch die Verstellung des Kolbenanschlages der Hub des Betätigungsknopfes für den Kolben verändert wird. Besonders ungünstig ist, daß bei kleinen Dosiervolumina kleine Betätigungshübe mit verhältnismäßig hohem Kraftaufwand gegen die Wirkung der Rückstellfeder auszuführen sind.

Davon ausgehend liegt der Erfindung die Aufgabe zugrunde, ein Verfahren zum Dosieren von Flüssigkeiten und eine Vorrichtung zum Dosieren von Flüssigkeiten mit günstigeren Handhabungseigenschaften zu schaffen.

Die Aufgabe wird durch ein Verfahren mit den Merkmalen des Anspruches 1, durch eine Vorrichtung mit dem Merkmalen des Anspruches 10 und durch eine Vorrichtung mit den Merkmalen des Anspruches 11 gelöst. Vorteilhafte Ausgestaltungen der Erfindung sind in der Unteransprüche angegeben.

Bei dem Verfahren zum Dosieren von Flüssigkeiten mit einer Kammer für ein Gas und einem damit verbindbaren Aufnahmevolumen für eine Flüssigkeit mit einer Öffnung zur Umgebung

- wird ein Sollvolumen der von dem Aufnahmevolumen aufzunehmenden Flüssigkeit vorgegeben,
- wird ein Kammerunterdruck ermittelt, der in der Kammer vorhanden sein muß, um nach Eintauchen der Öffnung in die Flüssigkeit und Verbinden der Kammer mit dem Aufnahmevolumen die Aufnahme des Sollvolumens der Flüssigkeit in dem Aufnahmevolumen zu bewirken,
- wird in der Kammer der Kammerunterdruck erzeugt,
- wird das Aufnahmevolumen mit der Öffnung in die Flüssigkeit eingetaucht und
- wird die Kammer mit dem Aufnahmevolumen verbunden und das Sollvolumen der Flüssigkeit in dem Aufnahmevolumen aufgenommen.

Bei dem erfindungsgemäßen Verfahren wird nicht wie im Stande der Technik das Dosiervolumen über die Veränderung eines Kolbenhubes eingestellt. Vielmehr wird aufgrund eines vorgegebenen Sollvolumens ein Kammerunterdruck ermittelt und in einer Kammer erzeugt, der nach Eintauchen der Öffnung in eine Flüssigkeit und Verbinden des Aufnahmevolumens mit der Kammer zur Folge hat, daß genau das Sollvolumen in das Aufnahmevolumen aufsteigt. Der Zusammenhang zwischen Sollvolumen und zugehörigem Kammerunterdruck kann beispielsweise für eine Flüssigkeit empirisch (insbesondere experimentell) ermittelt werden. Er kann aber auch berechnet werden, beispielsweise indem der Sollunterdruck errechnet wird, der im Aufnahmevolumen oberhalb der Flüssigkeit herrschen muß, um das Sollvolumen der Flüssigkeit in dem Aufnahmevolumen zu halten, und indem ermittelt wird, welcher Kammerunterdruck zunächst erzeugt werden muß, um nach dem Verbinden der Kammer mit dem Aufnahmevolumen genau den Aufstieg des Sollvolumens der Flüssigkeit in das Aufnahmevolumen und den Sollunterdruck oberhalb der Flüssigkeit zu erreichen. Unabhängig davon, wie der Kammerunterdruck im einzelnen ermittelt wird, ist die Vorgabe des Sollvolumens und die Ermittlung und Erzeugung des Kammerunterdruckes viel handhabungsfreundlicher realisierbar, als die Einstellung des Dosiervolumens und die Kolbenbetätigung im Stand der Technik.

Das in der Kammer vorhandene Gas ist vorzugsweise Luft. Der Kammerunterdruck kann auf verschiedene Weise erzeugt werden. Gemäß einer Ausgestaltung des Verfahrens wird ein in der Kammer erzeugter Unterdruck gemessen und aufgrund eines Vergleiches mit dem Kammerunterdruck an diesen angeglichen.

Grundsätzlich ist es möglich, die Angleichung an den Kammerunterdruck durch Steigerung des Unterdruckes in der Kammer vorzunehmen. Gemäß einer Ausgestaltung wird zunächst in der Kammer ein Unterdruck erzeugt, der den Kammerunterdruck übersteigt und wird danach durch einen teilweisen Druckausgleich zwischen Kammer und Umgebung der Kammerunterdruck erreicht. Auf diese Weise kann der Kammerunterdruck besonders einfach und genau erzeugt werden.

Nach einer weiteren Ausgestaltung wird der Unterdruck in der Kammer selbsttätig an den Kammerunterdruck angeglichen.

Nicht immer muß die aufgenommene Flüssigkeit aus dem Aufnahmevolumen nach außen abgegeben werden, beispielsweise wenn sie in dem Aufnahmevolumen oder in einer das Aufnahmevolumen aufweisenden Vorrichtung analysiert oder weiterverarbeitet werden soll. Für eine Abgabe aus dem Aufnahmevolumen nach außen wird die aufgenommene Flüssigkeit gemäß einer Ausgestaltung durch Anlegen eines Überdruckes an das Aufnahmevolumen aus der Öffnung des Aufnahmevolumens ausgetrieben. Beispielsweise kann ein Sollvolumen einer Flüssigkeit aus einem Vorratsbehälter in dem Aufnahmevolumen aufgenommen und aus dem Aufnahmevolumen in ein Reaktionsgefäß abgegeben werden.

Gemäß einer Ausgestaltung wird das Sollvolumen manuell eingegeben. Da eine Zwangskopplung an ein Getriebe für die Verstellung eines Kolbenanschlages entfällt, ist die Eingabe des Sollvolumens sehr bedienungsfreundlich.

Gemäß einer Ausgestaltung wird der Unterdruck und/oder der Überdruck mittels einer manuell betätigbaren Gasverdrängungseinrichtung erzeugt. Hierdurch ist es möglich, das Verfahren mit besonders geringem apparativen Aufwand auszuführen.

Gemäß einer Ausgestaltung wird die Gasverdrängungseinrichtung beim Erzeugen des Unterdrukkes und/oder des Überdruckes um einen bestimmten, von der Wahl des Sollvolumens unabhängigen Betätigungsweg betätigt. Dies ist handhabungsfreundlicher als die variablen Betätigungswege bei den bekannten einstellbaren Pipetten.

Grundsätzlich ist es möglich, die Flüssigkeit stets mit derselben Volumenverdrängung aus dem Aufnahmevolumen zu verdrängen, unabhängig von dem Sollvolumen. Falls die Volumenverdrängung der Gasverdrängungseinrichtung auf das maximal vorgebbare Sollvolumen abgestimmt ist, führt dies bei Vorgabe eines geringeren Sollvolumens dazu, daß nur über einen geringen Anteil des Betätigungsweges der Gasverdrängungseinrichtung Flüssigkeit ausgestoßen wird. Dies kann wiederum zu Dosierfehlern führen. Für eine "feinfühlige" Flüssigkeitsabgabe unter Ausschöpfung des gesamten Betätigungsweges wird gemäß einer Ausgestaltung der an das Aufnahmevolumen angelegte Überdruck so gesteuert, daß die Flüssigkeit unabhängig von dem Sollvolumen im wesentlichen über den gesamten Betätigungsweg der Gasverdrängungseinrichtung ausgetrieben wird. Dabei kann der zurückgelegte Teil des Betätigungsweges von einem Wegsensor gemessen werden.

In jedem Fall kann durch einen Überhub dafür Sorge getragen werden, daß die Flüssigkeit praktisch vollständig aus dem Aufnahmevolumen ausgetrieben wird.

Eine zur Durchführung des Verfahrens geeignete Vorrichtung hat

- eine Kammer für ein Gas,
- ein mit der Kammer über eine erste Ventileinrichtung verbundenes Aufnahmevolumen für eine Flüssigkeit mit einer Öffnung zur Umgebung,
- eine mit der Kammer über eine zweite Ventileinrichtung verbundene Gasverdrängungseinrichtung,
- einen an die Kammer angeschlossenen Drucksensor
- Eingabeeinrichtungen für das Sollvolumen und für die Steuerung der Aufnahme und/oder Abgabe von Flüssigkeit, und
- eine Steuerungseinrichtung, die mit den Eingabeeinrichtungen, dem Drucksensor und den Ventileinrichtungen verbunden ist, um die Erzeugung des Kammerunterdruckes in der Kammer und die Aufnahme von Flüssigkeit in dem Aufnahmevolumen und/oder die Abgabe von Flüssigkeit aus dem Aufnahmevolumen zu steuern.

Falls vor dem Erzeugen des Kammerunterdruckes Gas aus der Gasverdrängungseinrichtung verdrängt werden muß, können die erste und die zweite Ventileinrichtung geöffnet werden, damit das Gas in die Umgebung entweicht. Auch ist es möglich, beim Verdrängen des Gases aus der Gasverdrängungseinrichtung die zweite Ventileinrichtung und eine die Kammer mit Umgebung verbindende dritte Ventileinrichtung zu öffnen.

Für das Erzeugen des Kammerunterdruckes wird die erste Ventileinrichtung und die gegebenenfalls vorhandene dritte Ventileinrichtung geschlossen und die zweite Ventileinrichtung geöffnet. Danach kann mittels der Gasverdrängungseinrichtung Gas aus der Kammer abgezogen werden. Hierdurch kann ein allmählicher Anstieg des Unterdruckes bewirkt werden, der gestoppt wird, wenn der Drucksensor den Kammerunterdruck detektiert. Dann kann die zweite Ventileinrichtung geschlossen werden.

Statt dessen kann zunächst ein vom eingestellten Sollvolumen unabhängiger Unterdruck erzeugt werden, der den Kammerunterdruck übersteigt. Danach kann die zweite Ventileinrichtung geschlossen werden. Ferner kann durch Öffnen der ersten Ventileinrichtung oder der gegebenenfalls vorhandenen dritten Ventileinrichtung der Unterdruck in der Kammer abgebaut werden, bis der Drucksensor den Kammerunterdruck detektiert.

Die Steuerungseinrichtung steuert das Arbeiten der Ventileinrichtungen in Abhängigkeit von den mittels der Eingabeeinrichtungen eingegebenen Informationen und von den Meßwerten, die der Drucksensor liefert. Auf diese Weise ist es möglich, eine Handpipette mit Zweiknopfbedienung zu schaffen, wobei mittels des einen Knopfes das Sollvolumen eingegeben und mittels des anderen Knopfes die Gasverdrängungseinrichtung betätigt wird. Die Handpipette kann so ausgeführt werden, daß die Bedienung weitgehend analog zur Bedienung herkömmlicher Handpipetten ist.

Eine andere zur Durchführung des Verfahrens geeignete Vorrichtung unterscheidet sich von der vorstehenden dadurch, daß die Kammer nicht über eine zweite Ventileinrichtung mit der Gasverdrängungseinrichtung verbunden ist, sondern daß die Gasverdrängungseinrichtung die Kammer als Verdrängungskammer aufweist. Die Steuerungseinrichtung ist mit der ersten Ventileinrichtung verbunden und gegebenenfalls mit einer dritten Ventileinrichtung, die die Kammer mit der Umgebung verbindet.

Bei dieser Vorrichtung kann Gas aus der Verdrängungskammer verdrängt werden, indem die erste Ventileinrichtung bzw. die gegebenenfalls vorhandene dritte Ventileinrichtung geöffnet wird. Danach wird die erste bzw. die dritte Ventileinrichtung geschlossen und der Unterdruck in der Verdrängungskammer erzeugt. Dieser Vorgang kann durch das Erreichen des Kammerunterdruckes begrenzt werden. Statt dessen ist es möglich, einen den Kammerunterdruck übersteigenden Unterdruck, der unabhängig von dem gewählten Sollvolumen ist, zu erzeugen und danach durch Öffnen der ersten bzw. der dritten Ventileinrichtung den Kammerunterdruck einzustellen. Das Arbeiten der ersten bzw. dritten Ventileinrichtung wird von der Steuerungseinrichtung in Abhängigkeit von den Informationen gesteuert, die mittels der Eingabeeinrichtungen eingegeben werden und in Abhängigkeit von den Meßwerten, die der Drucksensor liefert. Diese Vorrichtung ist mit besonders geringem Aufwand ausführbar, da sie grundsätzlich mit einer einzigen Ventileinrichtung auskommt.

Bei beiden Lösungen kann die vom Aufnahmevolumen ausgenomme Flüssigkeit durch Betätigen der Gasverdrängungseinrichtung ausgestoßen werden. Bei der ersten Vorrichtung kann der Überdruck unter Öffnen der ersten und zweiten Ventileinrichtungen durch die Kammer in das Aufnahmevolumen eingeleitet werden. Statt dessen kann die Gasverdrängungseinrichtung über einen Bypass mit einer vierten Ventileinrichtung direkt mit dem Aufnahmevolumen verbunden und die Steuerungseinrichtung mit der vierten Ventileinrichtung verbunden sein, um diese für die Abgabe von Flüssigkeit zu öffnen, wenn die Gasverdrängungseinrichtung einen Überdruck erzeugt. Bei der zweiten Vorrichtung, bei der die Gasverdrängungseinrichtung die Kammer als Verdrängungskammer aufweist, kann der Überdruck direkt durch Öffnen der ersten Ventileinrichtung in das Aufnahmevolumen eingeleitet werden.

Gemäß einer Ausgestaltung weisen die Eingabeeinrichtungen für das Sollvolumen ein Einstellrad auf, mit dem das Sollvolumen einfach einstellbar ist. Das Einstellrad kann Markierungen bzw. Symbole für die Anzeige des eingestellten Sollvolumens haben. Ein gesondertes Display kann entfallen. Die Eingabeeinrichtungen können einen Sensor zur Detektion der Betätigung der Gasverdrängungseinrichtung aufweisen, um die Aufnahme bzw. Abgabe von Flüssigkeit in Abhängigkeit von dieser Betätigung zu steuern.

Gemäß einer Ausgestaltung ist die Gasverdrängungseinrichtung eine Kolben-Zylinder-Einrichtung oder eine Faltenbalgeinrichtung. Die Gasverdrängungseinrichtung kann ähnlich wie bei herkömmlichen Pipetten ausgeführt sein.

Die Betätigung der Gasverdrängungseinrichtung erfolgt vorzugsweise manuell. Grundsätzlich kann sie aber auch motorisch erfolgen.

Gemäß einer Ausgestaltung hat die Gasverdrängungseinrichtung eine Federeinrichtung zum Rückstellen in eine Ausgangslage. Die Gasverdrängungseinrichtung muß dann nur in einer Richtung betätigt werden. Vorzugsweise wird sie betätigt, um Gas aus der Gasverdrängungseinrichtung herauszudrücken, wie bei herkömmlichen Pipetten.

Gemäß einer Ausgestaltung ist das Aufnahmevolumen eine austauschbare Pipettenspitze. Es können marktübliche Pipettenspitzen zum Einsatz kommen. Vorzugsweise sind diese aus Kunststoff.

Gemäß einer Ausgestaltung ist/sind die Steuerungsrichtung und/oder der Drucksensor und/oder die Ventileinrichtungen und/oder die Eingabeeinrichtungen elektrische Einrichtungen und ist eine elektrische Stromversorgung zum Speisen mindestens einer elektrischen Einrichtung vorhanden.

Gemäß einer Ausgestaltung handelt es sich bei der elektrischen Stromversorgung um mindestens eine Batterie oder um mindestens einen Akku, insbesondere bei einer Ausführung als Handgerät.

Gemäß eine Ausgestaltung ist die Vorrichtung ein Handgerät.

Schließlich sieht eine Ausgestaltung vor, daß mehrere parallele Aufnahmevolumina vorhanden sind, um eine Mehrkanalpipette zu verwirklichen.

Die Erfindung wird nachfolgend anhand der anliegenden Zeichnungen eines Ausführungsbeispieles näher erläutert. In den Zeichnungen zeigen:

Fig. 1 eine manuell betätigbare Handpipette beim Herausdrücken der Luft im grobschematischen Blockbild;

Fig. 2 dieselbe Pipette beim Erzeugen eines Unterdruckes im grobschematischen Teil-Blockbild;

Fig. 3 dieselbe Pipette nach dem Einregeln des Kammerunterdruckes im grobschematischen Teil-Blockbild;

Fig. 4 dieselbe Pipette nach Aufnahme des Sollvolumens im grobschematischen Teil-Blockbild.

Die Vorrichtung hat eine Kammer 1 für ein Gas. Die Kammer 1 ist über eine erste Ventileinrichtung 2 mit einer austauschbaren Pipettenspitze 3 verbunden. Diese weist unten eine Öffnung 3' zur Umgebung auf. Ferner ist die Kammer 1 über eine zweite Ventileinrichtung 4 mit einer Kolben-Zylinder-Einrichtung 5 verbunden. Diese weist einen Kolben 5' auf, der axialverschieblich in einem Zylinder 5" angeordnet ist. Der Kolben 5' ist oben mit einem Betätigungsknopf 5''' verbunden. Über eine dritte Ventileinrichtung 6 ist die Kammer 1 mit der Umgebung verbunden.

An die Kammer 1 ist ein Drucksensor 7 angeschlossen. Der Drucksensor 7 ist mit einem Rechner 8 (z.B. ein Mikrocomputer) verbunden. Der Rechner 8 ist zudem mit den Ventileinrichtungen 2, 4 und 6 verbunden.

An den Rechner 8 sind Eingabeeinrichtungen 9 angeschlossen. Diese haben ein drehbares Einstellrad 9' mit Markierungen für die Anzeige des eingestellten Sollvolumens. Die Elemente 1, 2 sowie 4 bis 9 sind in einem Gehäuse 10 untergebracht. Dieses hat unten einen Sitz 11 (z.B. Steckkonus) auf dem die Pipettenspitze 3 mit ihrer oberen Öffnung 3'' sitzt. Das Einstellrad 9' und der Betätigungskopf 5''' stehen oben vom Gehäuse 10 vor.

Die Vorrichtung funktioniert wie folgt:

Mittels der Eingabeeinrichtungen 9 wird ein aufzunehmendes Sollvolumen $V_{soll}$ eingegeben. Der Rechner 8 errechnet einen Sollunterdruck $P_{soll}$, der oberhalb des Flüssigkeitsspiegels in der Pipettenspitze 3 herrschen muß, damit die Pipettenspitze 3 exakt das Sollvolumen $V_{soll}$ an Flüssigkeit aufnimmt. Der Sollunterdruck $P_{soll}$ ist durch eine Bilanzierung der Kräfte ermittelbar, die auf die Flüssigkeitssäule mit dem Sollvolumen $V_{soll}$ in der Pipettenspitze 3 wirken. Es gilt:

$$(1) \qquad P_0 - P_{soll} = \rho \times g \times h$$

mit:

P_0 = Umgebungsdruck
$\rho$ = spezifisches Gewicht der Flüssigkeit
g = Erdbeschleunigung
h = Höhe der Flüssigkeitssäule mit dem Sollvolumen $V_{soll}$ in der Pipettenspitze

die Höhe h ist folgendermaßen ermittelbar:

$$(2) \qquad V_{soll} = \int_0^h Q\,(y)\,dy$$

mit

Q (y) = Querschnitt der Pipettenspitze im Abstand y von der Öffnung.

Für eine konische und/oder zylindrische Pipettenspitze ist das Integral leicht lösbar.

Für die Berechnung des Sollunterdruckes $P_{soll}$ sind dem Rechner 8 insbesondere das Sollvolumen $V_{soll}$, das spezifische Gewicht der Flüssigkeit und die geometrischen Daten der Pipettenspitze 3 bekannt zu geben. Dies kann mittels der Eingabeeinrichtungen 9 geschehen. Die geometrischen Daten und das spezifische Gewicht können auch gespeichert sein. Gegebenenfalls kann mittels der Eingabeeinrichtungen 9 eine Auswahl unter gespeicherten Werten erfolgen.

Aufgrund des Sollunterdruckes $P_{soll}$ errechnet der Rechner 8 den Kammerunterdruck $P_1$, der in der Kammer 1 vor ihrem Verbinden mit der Pipettenspitze 3 herrschen muß. Unter der Voraussetzung, daß beim Verbinden der Kammer 1 mit der Pipettenspitze 3 die Anzahl der Gasteilchen und die Temperatur des Gases im System konstant bleibt, kann unter Zugrundelegung eines idealen Gases die Berechnung von $P_1$ mit der folgenden Formel erfolgen:

$$(P_0 - P_{soll}) \times V_x = (P_0 - P_1) \times V_0 + P_0 \times V_s$$

mit

$V_0$ = Volumen der Kammer bis zu den Ventileinrichtungen

$V_s$ = Volumen der Pipettenspitze bis zur ersten Ventileinrichtung

$V_x = V_o + V_s - V_{soll}$ = Volumen, in dem der Unterdruck $P_{soll}$ herrscht, wenn das Sollvolumen $V_{soll}$ der Flüssigkeit in der Pipettenspitze ist.

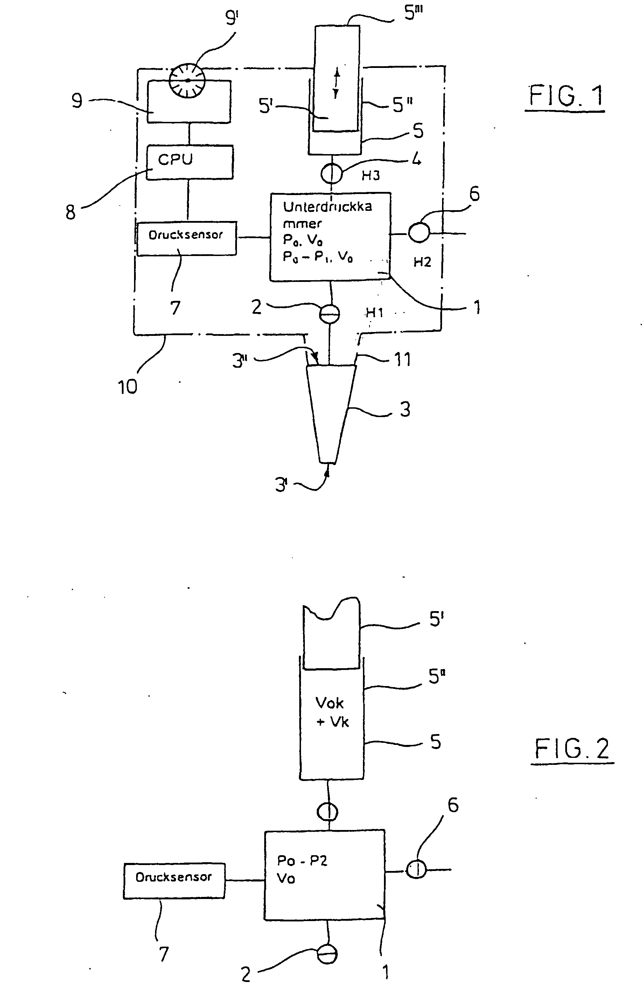

Zunächst wird gemäß Fig. 1 bei geöffneten Ventileinrichtungen 4 und 6 durch Abwärtsdrücken des Kolbens 5' Luft aus der Kolben-Zylinder-Einrichtung 5 herausgedrückt. Anschließend wird die Ventileinrichtung 6 geschlossen und der Kolben 5' gemäß Fig. 2 aufwärts bewegt, beispielsweise von einer Kolbenrückstellfeder. Dabei ist die Ventileinrichtung 2 geschlossen und wird in der Kammer 1 ein Unterdruck $P_2$ erzeugt. Dieser Unterdruck $P_2$ ist so gewählt, daß er größer ist, als sämtliche Kammerunterdrucke $P_1$ im Einstellbereich der Pipette. Danach wird auch die Ventileinrichtung 4 geschlossen.

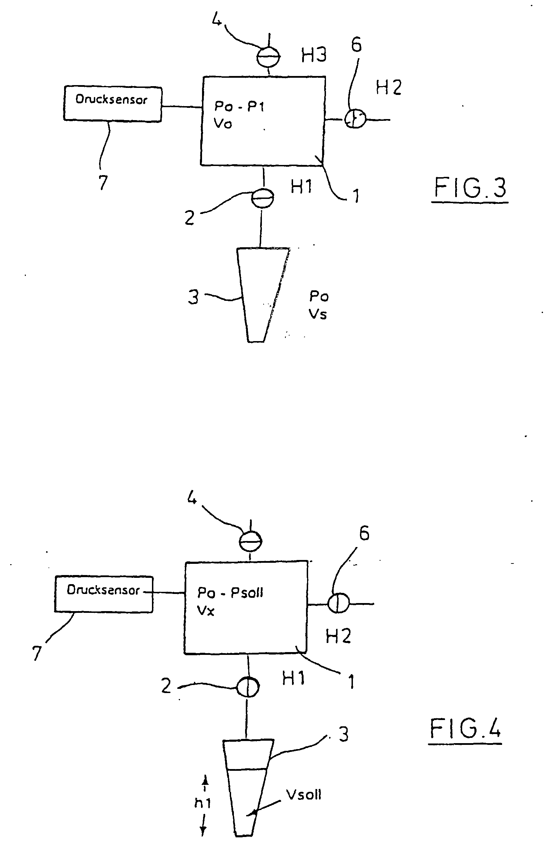

Danach wird gemäß Fig. 3 vom Rechner 8 durch einen geregelten Belüftungsvorgang über die Ventileinrichtung 6 der gewünschte Kammerdruck $P_1$ in der Kammer 1 eingestellt. Während dieses im Hintergrund ablaufenden Regelvorganges kann die Pipettenspitze 3 bereits mit der Öffnung 3' in die Flüssigkeit eingetaucht sein. Der Regelvorgang kann so schnell ablaufen, daß der Benutzer die Verzögerung der Flüssigkeitsaufnahme bis zum Öffnen der Ventileinrichtung 2 nicht bemerkt.

Bei geöffneter Ventileinrichtung 2 bleiben die Ventileinrichtungen 4 und 6 geschlossen. Die Durchflußrate des Ventileinrichtung 2 kann so gewählt sein, daß die Einströmgeschwindigkeit der Flüssigkeit der bei einer Entlastung des Kolbens einer herkömmlichen Handpipette entspricht. Das Sollvolumen $V_{soll}$ wird in die Pipettenspitze 3 aufgenommen und der Sollunterdruck $P_{soll}$ stellt sich in der Pipettenspitze 3 ein. Dies ist in der Fig. 4 gezeigt.

Die Abgabe der Flüssigkeit wird nach Öffnen der Ventileinrichtung 4 durch Abwärtsbewegung des Kolbens 5' bewirkt. Ein besonderer Überhub ist nicht erforderlich, da das von der Kolben-Zylinder-Einrichtung 5 verdrängte Luftvolumen ohnehin ein größeres ist, als das Sollvolumen $V_{soll}$. Grundsätzlich ist es möglich, die nach Abgabe folgende Aufwärtsbewegung des Kolbens 5' schon wieder für den Aufbau eines Unterdruckes in der Kammer 1 zu nutzen. Für den Aufbau des Unterdruckes kann aber auch der Kolben 5' aufs Neue herabgedrückt werden.

Die Betätigung der Vorrichtung kann analog der Betätigung herkömmlicher Kolbenhubpipetten erfolgen. Die Steuerung der Ventileinrichtungen 2, 4, 6 kann vom Rechner 8 in Abhängigkeit von der Betätigung des Kolbens 5' vorgenommen werden. Hierfür kann beispielsweise ein Sensor vorhanden sein, der die Bewegung des Kolbens 5' detektiert oder ein Taster, der bei jeder Betätigung des Betätigungskopfes 5" ausgelöst wird.

## Patentansprüche

1. Verfahren zum Dosieren von Flüssigkeiten mit einer Kammer (1) für ein Gas und einem damit verbindbaren Aufnahmevolumen (3) für eine Flüssigkeit mit einer Öffnung (3') zur Umgebung, bei dem

   - ein Sollvolumen der von dem Aufnahmevolumen aufzunehmenden Flüssigkeit vorgegeben wird, .
   - ein Kammerunterdruck ermittelt wird, der in der Kammer (1) vorhanden sein muß, um nach Eintauchen der Öffnung (3') in die Flüssigkeit und Verbinden der Kammer (1) mit dem Aufnahmevolumen (3) die Aufnahme des Sollvolumens der Flüssigkeit in dem Aufnahmevolumen zu bewirken,
   - in der Kammer (1) der Kammerunterdruck erzeugt wird,
   - das Aufnahmevolumen (3) mit der Öffnung (3') in die Flüssigkeit eingetaucht wird, und
   - die Kammer (1) mit dem Aufnahmevolumen (3) verbunden und das Sollvolumen der Flüssigkeit in dem Aufnahmevolumen (3) aufgenommen wird.

2. Verfahren nach Anspruch 1, bei dem der in der Kammer (1) erzeugte Unterdruck gemessen und aufgrund eines Vergleichs mit dem Kammerunterdruck an diesen angeglichen wird.

3. Verfahren nach Anspruch 2, bei dem zunächst in der Kammer (1) ein Unterdruck erzeugt wird, der den Kammerunterdruck übersteigt und danach durch einen teilweisen Druckausgleich zwischen Kammer (1) und Umgebung an den Kammerunterdruck angeglichen wird.

4. Verfahren nach einem der Ansprüche 1 bis 3, bei dem die Angleichung des Unterdruckes an den Kammerunterdruck selbsttätig geregelt wird.

5. Verfahren nach einem der Ansprüche 1 bis 4, bei dem die aufgenommene Flüssigkeit durch Anlegen eines Überdruckes an das Aufnahmevolumen (3) aus der Öffnung (3') des Aufnahmevolumens (3) ausgetrieben wird.

6. Verfahren nach einem der Ansprüche 1 bis 5, bei dem das Sollvolumen manuell eingestellt wird.

7. Verfahren nach einem der Ansprüche 1 bis 6, bei dem der Unterdruck und/oder der Überdruck mittels einer manuell betätigbaren Gasverdrängungseinrichtung (5) erzeugt wird.

8. Verfahren nach Anspruch 7, bei dem die Gasverdrängungseinrichtung beim Erzeugen des Unterdruckes und/oder Überdruckes um einen bestimmten, von der Wahl des Sollvolumens unabhängigen Betätigungsweg betätigt wird.

9. Verfahren nach Anspruch 8, bei dem der an das Aufnahmevolumen (3) angelegte Überdruck so gesteuert wird, daß die Flüssigkeit unabhängig von dem gewählten Sollvolumen im wesentlichen über den gesamten Betätigungsweg der Gasverdrängungseinrichtung (5) ausgetrieben wird.

10. Vorrichtung zur Durchführung des Verfahrens nach einem der vorangegangenen Ansprüche mit

    - einer Kammer (1) für ein Gas,
    - einem mit der Kammer (1) über eine erste Ventileinrichtung (2) verbundenen Aufnahmevolumen (3) für Flüssigkeit mit einer Öffnung (3') zur Umgebung,
    - einer mit der Kammer (1) über eine zweite Ventileinrichtung (4) verbundenen Gasverdrängungseinrichtung (5),
    - einem an die Kammer (1) angeschlossenen Drucksensor (7),
    - Eingabeeinrichtungen (9) für das Sollvolumen und für die Steuerung der Aufnahme und/oder Abgabe von Flüssigkeit und
    - einer Steuerungseinrichtung (8), die mit dem Drucksensor (7) und den Ventileinrichtungen (2, 4, 6) verbunden ist, um die Erzeugung des Kammerunterdruckes in der Kammer (1) und die Aufnahme von Flüssigkeit in dem Aufnahmevolumen (3) und/oder die Abgabe von Flüssigkeit aus dem Aufnahmevolumen (3) zu steuern.

11. Vorrichtung zur Durchführung des Verfahrens nach einem der vorangegangenen Ansprüche mit

- einer Kammer (1) für ein Gas,
- einem mit der Kammer (1) über eine erste Ventileinrichtung (2) verbundenen Aufnahmevolumen (3) für eine Flüssigkeit mit einer Öffnung (3') zur Umgebung,
- einer die Kammer (1) als Verdrängungskammer aufweisenden Gasverdrängungseinrichtung (5),
- einem an die Kammer (1) angeschlossenen Drucksensor (7),
- Eingabeeinrichtungen (9) für das Sollvolumen und für die Steuerung der Aufnahme und/oder Abgabe von Flüssigkeit und
- einer Steuerungseinrichtung (8), die mit dem Drucksensor (7) und der Ventileinrichtung (2) verbunden ist, um die Erzeugung des Kammerunterdruckes in der Kammer (1) und die Aufnahme von Flüssigkeit in dem Aufnahmevolumen (3) und/oder die Abgabe von Flüssigkeit aus dem Aufnahmevolumen (3) zu steuern.

12. Vorrichtung nach Anspruch 10 oder 11, bei der die Kammer (1) über eine dritte Ventileinrichtung (6) mit der Umgebung verbunden ist und die Steuerungseinrichtung (8) mit der dritten Ventileinrichtung (6) verbunden ist.

13. Vorrichtung nach Anspruch 10 oder 12, bei der die Gasverdrängungseinrichtung (5) über einen Bypass mit einer vierten Ventileinrichtung direkt mit dem Aufnahmevolumen (3) verbunden ist und die Steuerungseinrichtung (8) mit der vierten Ventileinrichtung verbunden ist.

14. Vorrichtung nach einem der Ansprüche 10 bis 13, bei der die Eingabeeinrichtung (9) für das Sollvolumen ein Einstellrad (9') aufweist.

15. Vorrichtung nach einem der Ansprüche 10 bis 14, bei der die Gasverdrängungseinrichtung (5) eine Kolben-Zylinder-Einrichtung oder eine Faltenbalgeinrichtung ist.

16. Vorrichtung nach einem der Ansprüche 10 bis 15, bei der die Gasverdrängungseinrichtung (5) manuell betätigbar ist.

17. Vorrichtung nach einem der Ansprüche 10 bis 16, bei der die Gasverdrängungseinrichtung (5) eine Federeinrichtung zum Rückstellen in eine Ausgangslage aufweist.

18. Vorrichtung nach einem der Ansprüche 10 bis 17, bei der das Aufnahmevolumen (3) eine austauschbare Pipettenspitze ist.

19. Vorrichtung nach einem der Ansprüche 10 bis 18, bei der die Steuerungseinrichtung (8) und/oder der Drucksensor (7) und/oder die Ventileinrichtungen (2, 4, 6) und/oder die Eingabeeinrichtungen (9) elektrische Einrichtungen ist/sind und eine elektrische Stromversorgung zum Speisen mindestens einer elektrischen Einrichtung vorhanden ist.

20. Vorrichtung nach Anspruch 19, bei der die elektrische Stromversorgung mindestens eine Batterie oder mindestens ein Akku ist.

21. Vorrichtung nach einem der Ansprüche 10 bis 20, die ein Handgerät ist.

22. Vorrichtung nach einem der Ansprüche 10 bis 21, die mehrere parallele Aufnahmevolumina (3) aufweist.

**Claims**

1. A liquid proportioning method using a chamber (1) for a gas and a reception volume (3) connectable thereto for a liquid with an aperture (3') to the environment, wherein

   - a desired volume is predetermined for the liquid to be taken up by the reception volume,
   - a chamber negative pressure is determined which has to exist in the chamber (1) to cause the desired liquid volume to be taken up in the reception volume after the aperture (3') is dipped into the liquid and the chamber (1) is connected to the reception volume (3),
   - the chamber negative pressure is produced in the chamber (1),
   - the reception volume (3) dips its aperture (3') into the liquid, and
   - the chamber (1) is connected to the reception volume (3) and the desired volume of the liquid is taken up in the reception volume (3).

2. The method according to claim 1 wherein the negative pressure produced in the chamber (1) is measured and is matched to the chamber negative pressure following a comparison thereto.

3. The method according to claim 2 wherein a negative pressure which exceeds the chamber negative pressure is initially produced in the chamber (1) and is then matched to the chamber negative pressure by partial pressure compensation between the chamber (1) and the environment.

4. The method according to any one of claims 1 to 3 wherein the matching of the negative pressure to the chamber negative pressure is regulated automatically.

**5.** The method according to any one of claims 1 to 4 wherein the liquid which was taken up is expelled from the aperture (3') of the reception volume (3) by applying a positive pressure to the reception volume (3).

**6.** The method according to any one of claims 1 to 5 wherein the desired volume is adjusted manually.

**7.** The method according to any one of claims 1 to 6 wherein the negative pressure and/or positive pressure is produced by means of a manually operable gas displacement device (5).

**8.** The method according to claim 7 wherein the gas displacement device, upon production of the negative pressure and/or positive pressure, is operated by a certain actuation distance independent on the choice made for the desired volume.

**9.** The method according to claim 8 wherein the positive pressure applied to the reception volume (3) is controlled so as to expel the liquid substantially through the entire actuation distance of the gas displacement device (5) with no regard to the desired volume chosen.

**10.** An apparatus for implementing the method according to any one of the preceding claims, comprising:

- a chamber (1) for a gas,
- a reception volume (3) for liquid that is connected to the chamber (1) via a first valve means (2) with an aperture (3') to the environment,
- a gas displacement device (5) connected to the chamber (1) via a second valve means (4),
- a pressure sensor (7) connected to the chamber (1),
- input means (9) for the desired volume and for controlling the reception and/or delivery of liquid, and
- a control means (8) which is connected to the pressure sensor (7) and the valve means (2, 4, 6) to control the generation of the chamber negative pressure in the chamber (1) and the reception of liquid into the reception volume (3) and/or the delivery of liquid from the reception volume (3).

**11.** An apparatus for implementing the method according to any one of the preceding claims, comprising:

- a chamber (1) for a gas,
- a reception volume (3) for a liquid that is connected to the chamber (1) via a first valve means (2) with an aperture (3') to the environment,
- a gas displacement device (5) having the chamber (1) as a displacement chamber,
- a pressure sensor (7) connected to the chamber (1)
- input means (9) for the desired volume and for controlling the reception and/or delivery of liquid, and
- a control means (8) which is connected to the pressure sensor (7) and the valve means (2) to control the generation of the chamber negative pressure in the chamber (1) and the reception of liquid into the reception volume (3) and/or the delivery of liquid from the reception volume (3).

**12.** The apparatus according to claim 10 or 11 wherein the chamber (1) is connected to the environment via a third valve means (6) and the control means (8) is connected to the third valve means (6).

**13.** The apparatus according to claim 10 or 12 wherein the gas displacement device (5) is connected directly to the reception volume (3) via a bypass including a fourth valve means and the control means (8) is connected to the fourth valve means.

**14.** The apparatus according to any one of claims 10 to 13 wherein the input means (9) has an adjusting wheel (9') for the desired volume.

**15.** The apparatus according to any one of claims 10 to 14 wherein the gas displacement device (5) is a piston-and-cylinder device or expansion bellows device.

**16.** The apparatus according to any one of claims 10 to 15 wherein the gas displacement device (5) is manually operable.

**17.** The apparatus according to any one of claims 10 to 16 wherein the gas displacement device (5) has a spring means to restore it to an initial position.

**18.** The apparatus according to any one of claims 10 to 17 wherein the reception volume (3) is an exchangeable pipette tip.

**19.** The apparatus according to any one of claims 10 to 18 wherein the control means (8) and/or the pressure sensor (7) and/or the valve means (2, 4, 6) and/or the input means (9) are electric devices and there is an electric power supply to feed at least one electric device.

**20.** The apparatus according to claim 19 wherein the electric power supply ist at least one battery or at least one accumulator.

**21.** The apparatus according to any one of claims 10 to 20 which is a hand-operated apparatus.

**22.** The apparatus according to any one of claims 10 to 21 which has a plurality of parallel reception volumes (3).

## Revendications

**1.** Procédé de dosage de liquides au moyen d'une chambre (1) pour un gaz et d'un volume de réception (3) pour un liquide avec une ouverture (3') vers l'environnement extérieur, ce volume pouvant être connecté à la chambre, procédé dans lequel :

- un volume de consigne du liquide à recevoir dans le volume de réception est prédéterminé,
- une dépression de chambre qui doit régner dans la chambre (1) est déterminée afin de produire la réception du volume de consigne du liquide dans le volume de réception après l'immersion de l'ouverture (3') dans le liquide et la connexion de la chambre (1) au volume de réception (3),
- la dépression de chambre est générée dans la chambre (1),
- l'ouverture (3') du volume de réception (3) est immergée dans le liquide, et
- la chambre (1) est connectée au volume de réception (3), et le volume de consigne du liquide est reçu dans le volume de réception (3).

**2.** Procédé selon la revendication 1, dans lequel la dépression générée dans la chambre (1) est mesurée et adaptée à la dépression de chambre sur la base d'une comparaison avec cette dernière.

**3.** Procédé selon la revendication 2, dans lequel une dépression qui dépasse la dépression de chambre est d'abord générée dans la chambre (1), puis est ensuite adaptée à la dépression de chambre par une compensation partielle de pression entre la chambre (1) et l'environnement extérieur.

**4.** Procédé selon l'une des revendications 1 à 3, dans lequel l'adaptation de la dépression à la dépression de chambre est réglée de manière automatique.

**5.** Procédé selon l'une des revendications 1 à 4, dans lequel le liquide réceptionné est chassé de l'ouverture (3') du volume de réception (3) par l'application d'une surpression au volume de réception (3).

**6.** Procédé selon l'une des revendications 1 à 5, dans lequel le volume de consigne est ajusté manuellement.

**7.** Procédé selon l'une des revendications 1 à 6, dans lequel la dépression et/ou la surpression sont générés à l'aide d'un dispositif de déplacement de gaz (5) actionnable manuellement.

**8.** Procédé selon la revendication 7, dans lequel le dispositif de déplacement de gaz est actionné, lors de la génération de la dépression et/ou de la surpression, le long d'une certaine course d'actionnement indépendamment du choix du volume de consigne.

**9.** Procédé selon la revendication 8, dans lequel la surpression appliquée au volume de réception (3) est commandée de telle façon que le liquide est chassé indépendamment du volume de consigne choisi, essentiellement le long de la course d'actionnement entière du dispositif de déplacement de gaz (5).

**10.** Dispositif pour la mise en oeuvre du procédé selon une des revendications précédentes, comprenant

une chambre (1) pour un gaz,
un volume de réception (3) de liquide connecté via un premier dispositif de soupape (2) à la chambre (1) et présentant une ouverture (3') vers l'environnement extérieur,
un dispositif de déplacement de gaz (5) relié par un deuxième dispositif (4) à la chambre (1),
un capteur de pression (7) connecté à la chambre (1),
des dispositifs d'entrée (9) du volume de consigne et pour la commande de la réception et/ou de distribution de liquide, et
un dispositif de commande (8) connecté au capteur de pression (7) et au dispositif de soupape (2, 4, 6) afin de commander la génération de la dépression dans la chambre (1) et la réception de liquide dans le volume de réception (3) et/ou la distribution de liquide à partir du volume de réception (3).

**11.** Dispositif pour la mise en oeuvre du procédé selon une des revendications précédentes, comprenant

une chambre (1) pour un gaz,
un volume de réception (3) de liquide connecté via un premier dispositif de soupape (2) à la chambre (1) et présentant une ouverture (3') vers l'environnement extérieur,
un dispositif de déplacement de gaz (5) comportant la chambre (1) en tant que chambre de déplacement,
un capteur de pression (7) connecté à la chambre (1),
des dispositifs d'entrée (9) du volume de consigne et pour la commande de réception et/ou de distribution de liquide, et
un dispositif de commande (8) connecté au capteur de pression (7) et au dispositif de soupape (2) afin de commander la génération de la dépression dans la chambre (1) et la réception de liquide dans le volume de réception (3) et/ou la distribution de liquide à partir du volume de réception (3).

12. Dispositif selon la revendication 10 ou 11, dans lequel la chambre (1) est reliée à l'environnement extérieur via un troisième dispositif de soupape (6), et dans lequel le dispositif de commande (8) est connecté au troisième dispositif de soupape (6).

13. Dispositif selon la revendication 10 ou 12, dans lequel le dispositif de déplacement de gaz (5) est raccordé via une dérivation à un quatrième dispositif de soupape directement au volume de réception (3), et dans lequel le dispositif de commande (8) est connecté au quatrième dispositif de soupape.

14. Dispositif selon l'une des revendications 10 à 13, dans lequel le dispositif d'entrée (9) du volume de consigne comporte une molette de réglage (9').

15. Dispositif selon l'une des revendications 10 à 14, dans lequel le dispositif de déplacement de gaz (5) est un dispositif à piston et cylindre ou un dispositif à soufflet.

16. Dispositif selon l'une des revendications 10 à 15, dans lequel le dispositif de déplacement de gaz (5) peut être actionné manuellement.

17. Dispositif selon l'une des revendications 10 à 16, dans lequel le dispositif de déplacement de gaz (5) comprend un dispositif à ressort de remise dans une position de départ.

18. Dispositif selon l'une des revendications 10 à 17, dans lequel le volume de réception (3) est une pointe de pipette échangeable.

19. Dispositif selon l'une des revendications 10 à 18, dans lequel le dispositif de commande (8) et/ou le capteur de pression (7) et/ou les dispositifs de soupape (2, 4, 6) et/ou les dispositifs d'entrée (9) est/sont des dispositifs électriques, et qu'une alimentation en courant électrique pour alimenter au moins un dispositif électrique est prévue.

20. Dispositif selon la revendication 19, dans lequel l'alimentation en courant électrique est au moins une pile ou au moins un accumulateur.

21. Dispositif selon l'une des revendications 10 à 20, qui est un appareil à main.

22. Dispositif selon l'une des revendications 10 à 21, qui comprend plusieurs volumes de réception (3) en parallèle.

FIG. 1

FIG. 2

4
H3
6
H2

Drucksensor

Po - P1
Vo

7
H1
2
1

3
Po
Vs

FIG.3


4
6
H2

Drucksensor

Po - Psoll
Vx

7
H1
2
1

3
Vsoll
h1

FIG.4